# EUROPÄISCHE PATENTSCHRIFT

(11) **EP 2 735 947 B1**
(45) Veröffentlichungstag und Bekanntmachung des Hinweises auf die Patenterteilung: **30.05.2018**
(21) Anmeldenummer: 13192423.5
(22) Anmeldetag: 12.11.2013
(51) Int. Cl.: G06F 3/042, H04N 1/60, G01J 3/02, B41F 33/00, H04N 1/58

(54) **Gestensteuerung für Druckmaschinen**
Gesture control for printing machines
Commande gestuelle pour imprimantes

(30) Priorität: 23.11.2012 DE 102012022882
(43) Veröffentlichungstag der Anmeldung: 28.05.2014
(73) Patentinhaber: Heidelberger Druckmaschinen AG, 69115 Heidelberg (DE)
(72) Erfinder: Berg, Winfried, 69126 Heidelberg (DE); Hauck, Dieter, 69412 Eberbach (DE); König, Edelbert, 76709 Kronau (DE)

(56) Entgegenhaltungen:
- EP-A2- 1 889 721
- DE-A1-102011 075 343
- DE-T2- 69 430 967

## Beschreibung

Die vorliegende Erfindung betrifft eine Vorrichtung zum Steuern einer Maschine und/oder eines Farbmessgeräts und/oder eines Inspektionssystems in der grafischen Industrie mit einem Steuerstand, welcher wenigstens einen Bildschirm zur Darstellung von Maschineninformationen und/oder Farbinformationen und/oder Bildinformationen aufweist.

Moderne Druckmaschinen verfügen über eine Vielzahl von Komponenten, welche der Drucker über die Maschinensteuerung einstellen kann, oder welche durch die Maschinensteuerung automatisch eingestellt werden. In beiden Fällen muss der Drucker über die aktuellen Einstellungen der Maschine informiert werden. Dazu sind üblicherweise Bildschirme vorgesehen, welche dem Drucker die Informationen melden. Aus dem Stand der Technik sind jedoch auch andere Möglichkeiten bekannt, den Drucker über den Maschinenzustand zu informieren. So sind aus der Offenlegungsschrift DE 10 2007 058 708 A1 neben der Darstellung optischer Informationen am Bildschirm auch die Rückmeldung mittels akustischer oder haptischer Informationen bekannt. Die Offenlegungsschrift beschreibt ein integriertes Bedienkonzept bei Druckmaschinen, welche wenigstens einen Rechner aufweisen, eine Bedieneinrichtung, eine Eingabeeinrichtung und eine Ausgabevorrichtung. Der Rechner der Maschine verarbeitet dabei wenigstens zwei Signale aus der Gruppe von akustischen, haptischen oder optischen Informationen. Dies bedeutet, dass der Drucker wenigstens zwei Möglichkeiten hat, Informationen zurückgemeldet zu bekommen. Ebenso kann der Drucker Bedienkommandos nicht nur über eine Tastatur eingeben, sondern z. B. per Sprache auch über ein Mikrofon. Des Weiteren ist es möglich, mittels einer Kamera Gesten des Bedienpersonals zu erkennen und so z. B. Bewegungen der Hände des Bedienpersonals aufzuzeichnen und diese in entsprechende Bedienbefehle zur Steuerung der Maschine umzusetzen.

Auch aus den Dokumenten WO 2010/078996 A2, DE 694 30 967 T2, DE 10 2011 075343 A1 und EP 1 889 721 A2 ist ein Gerät mit eine Eingabevorrichtung zur Eingabe von Steuerbefehlen bekannt, bei dem mittels eines Sensors Bewegungen und somit Gesten ohne Berührung der Eingabevorrichtung erfasst werden können. Der Sensor kann elektrostatisch oder kapazitiv arbeiten, es kann aber auch eine Kamera vorgesehen sein, um eine Bilderkennung der Hand des Bedieners durchzuführen und somit die Geste zu identifizieren.
Es ist Aufgabe der vorliegenden Erfindung, eine Vorrichtung zum Steuern einer Maschine und/oder eines Farbmessgeräts und/oder eines Inspektionssystems in der grafischen Industrie zu schaffen, welche eine Anwendung der Gestensteuerung auch in der alltäglichen Praxis ermöglicht.
Die vorliegende Aufgabe wird erfindungsgemäß durch Patentanspruch 1 gelöst. Vorteilhafte Ausgestaltungen der Erfindung sind den Unteransprüchen und den Zeichnungen zu entnehmen. Gemäß der vorliegenden Erfindung ist vorgesehen, dass der Steuerstand mehrere Sensoren zur Erfassung von Gesten einer Bedienperson aufweist, welche die Maschine und/oder das Farbmessgeräts und/oder das Inspektionssystems über den Steuerstand bedient. Erst durch das Vorsehen mehrerer Sensoren kann die Gestensteuerung in der Praxis tatsächlich funktionieren, da bei einer Maschine in der grafischen Industrie, wie z. B. einer Druckmaschine, das Bedienpersonal vor dem Steuerstand in unterschiedlichen Positionen steht und somit die Gesten auch aus unterschiedlichen Winkeln erfasst werden müssen. Dies ist mit einem einzigen Sensor nicht möglich, so dass mehrere Sensoren vorzusehen sind, um die Gesten des Bedienpersonals vor dem Steuerstand auch dann noch zuverlässig erkennen zu können, wenn das Bedienpersonal vor dem Steuerstand auf- und abgeht oder sich dreht.
In einer ersten Ausgestaltung der Erfindung ist vorgesehen, dass der Steuerstand unterhalb wenigstens eines Bildschirms eine Auflage zur Aufnahme eines bogenförmigen Bedruckstoffs aufweist und dass wenigstens ein Sensor so angeordnet ist, dass sie Gesten der Bedienperson erkennen kann, welche diese Bedienperson mit ihren Fingern an der Oberfläche eines auf der Auflage liegenden Bedruckstoffs zeigt. Bei dem Steuerstand einer Druckmaschine ist es üblich, ein sogenanntes Bogenauflagepult vorzusehen, auf dem ein bedruckter Bedruckstoff abgelegt werden kann. Dieses Bogenauflagepult dient dazu, dass der Drucker die Druckqualität des produzierten Bedruckstoffs visuell oder mittels eines Farbmessgeräts überprüfen kann. Vorteilhafterweise ist dazu das Bogenauflagepult unterhalb des Bildschirms angeordnet, so dass auf dem Bildschirm das Soll-Bild der Druckvorlage angezeigt werden kann. Der Drucker kann somit sowohl die Druckvorlage am Bildschirm als auch das Ergebnis des produzierten Bedruckstoffs auf der Bogenauflage unmittelbar nebeneinander im Auge behalten und somit Abweichungen zwischen der Druckvorlage auf dem Bildschirm und dem aufgelegten produzierten bogenförmigen Bedruckstoff problemlos erkennen. Wenn die Bedienperson nun Abweichungen zwischen dem produzierten Bedruckstoff und der angezeigten Druckvorlage auf dem Bildschirm erkennt, so möchte sie diese ausregeln und minimieren. Dazu muss an entsprechenden Stellen in Farbzonen, welche eine Unterfärbung oder Überfärbung aufweisen, entsprechend mehr oder weniger Farbe dosiert werden. Dies geht dann besonders leicht, wenn das Bedienpersonal nur auf die Stelle im Bedruckstoff zeigen muss, welche entsprechend mehr oder weniger Farbe braucht. Damit dieses Zeigen auf den Bedruckstoff zuverlässig erkannt wird, ist vorteilhaferweise vorgesehen, dass ein Sensor so angeordnet ist, dass er Gesten der Bedienperson auch dann erkennen kann, wenn die Bedienperson diese Gesten mit ihren Fingern an der Oberfläche des auf der Auflage liegenden Bedruckstoffs zeigt. Dazu muss der Sensor so angepasst sein, dass er die Finger der Bedienperson auf oder knapp oberhalb des Bedruckstoffs auch dann erkennt, wenn die Bedienperson sich z. B. nach vorne beugt und so einen Sensor, welcher direkt über der Bedienperson installiert ist, abdecken würde. Es ist daher wenigstens ein Sensor bevorzugt im unteren Bereich des Steuerstands knapp über der Bogenauflage vorzusehen, um die Gesten der Bedienperson an der Oberfläche des Bedruckstoffs zuverlässig erkennen zu können.

In einer weiteren Ausführungsform der vorliegenden Erfindung ist vorgesehen, dass die Sensoren Kameras sind und dass der Steuerstand einen Rechner aufweist, welcher Bilder der Kameras auswertet und diese Bilder derart auswertet, dass Bewegungen der Augen der Bedienperson erfasst werden und bei der Anzeige der Maschineninformationen und/oder Farbinformationen und/oder Bildinformationen auf dem Bildschirm berücksichtigt werden. Der Bildschirm am Steuerstand der Maschine kann als großer Bildschirm mit einer Bilddiagonale von 52 Zoll aufwärts ausgeführt sein, so dass das Bedienpersonal angezeigte Informationen auch aus größerer Entfernung erkennen kann und ein Bogen der Druckvorlage in Originalgröße dargestellt werden kann. Der Drucker hat dann nicht nur das auf dem Bildschirm angezeigte Bild im Blick, sondern auch Bedienelemente am Steuerpult oder auch Teile der Maschine. Dabei ist es vorteilhaft, dass dem Drucker diejenigen Informationen auf dem großen Bildschirm angezeigt werden, welche zu den Bedienelementen oder dem Teil der Druckmaschine passen, auf den der Drucker gerade seinen Blick gerichtet hat. Es ist nämlich davon auszugehen, dass der Drucker diejenigen Bedienelemente oder den Teil der Druckmaschine im Blick hat, die er gerade betätigen will oder für die er sich interessiert. Zu diesem Zweck kann ein sogenanntes "Eye Tracking" durchgeführt werden, um dem Drucker immer genau die Informationen auf dem Bildschirm anzuzeigen, welche zu seinem Blickfeld passen. Dazu werden mittels der Kameras Bewegungen der Augen der Bedienpersonen erfasst und diese im Rechner des Steuerstands entsprechend ausgewertet und dann die zum Blickfeld des Bedieners passenden Informationen auf dem Bildschirm angezeigt.

In einer weiteren Ausgestaltung der Erfindung ist vorgesehen, dass der Steuerstand eine Überdachung aufweist und dass an der Überdachung links und/oder rechts Sensoren befestigt sind. Der Steuerstand einer Druckmaschine weist üblicherweise eine Überdachung auf, um an dieser Überdachung eine sogenannte Farbprüfleuchte befestigen zu können. Die Farbprüfleuchte dient dazu, einen auf der Bogenauflage aufliegenden produzierten Bedruckstoff mit Normlicht korrekt farblich beurteilen zu können. Da die Farbwiedergabe von der Beleuchtung abhängig ist, ist es wichtig, dass der Bogen bei der Qualitätskontrolle korrekt beleuchtet wird. Weiterhin dient die Überdachung dazu, Fremdlicht abzuschirmen, so dass die Farbgebung verfälschende externe Beleuchtungsquellen zumindest nach oben hin abgeschirmt werden. Diese Überdachung kann vorteilhafterweise dazu genutzt werden links und/oder rechts Sensoren und insbesondere Kameras zur Erfassung der Gestensteuerung aufzunehmen. In diesem Fall müssen keine zusätzlichen Befestigungsvorrichtungen geschaffen werden, um die Sensoren montieren zu können. Da sich die Überdachung meist über den größten Teil des Steuerstands erstreckt, gibt es so eine problemlose Montagemöglichkeit für Sensoren, die links oder rechts an der Überdachung angebracht werden können und somit den gesamten Steuerstand erfassen können.

Vorteilhafterweise ist außerdem vorgesehen, dass die Vorrichtung in der Lage ist, Gesten von mehreren Bedienpersonen gleichzeitig zu erfassen. So kann z. B. eine Bedienperson Einstellungen an der Druckmaschine vornehmen, während die andere Bedienperson einen aufliegenden Bogen begutachtet und sich entsprechende Färbungshinweise auf dem Bildschirm anzeigen lassen kann. Um die Gesten mehrerer Bedienpersonen auseinanderhalten zu können, muss eine entsprechend Bildverarbeitung der Gesten stattfinden, bei der z. B. die Hände mehrerer Bedienpersonen eindeutig identifiziert werden. Dies kann anhand unterschiedlicher Größe der Hände oder sonstiger optischer Merkmale geschehen. Der Steuerungsrechner kann dann anhand der von den Sensoren gelieferten Bilder die Gesten den unterschiedlichen Bedienpersonen zuordnen und entsprechend auf dem Bildschirm Informationen für die eine und die andere Bedienperson anzeigen. Auf diese Art und Weise ist eine komfortable Bedienung einer Maschine mit mehreren Bedienpersonen möglich.

Weiterhin ist vorgesehen, dass die Überdachung eine Farbprüfleuchte aufweist und dass wenigstens ein Sensor in die Farbprüfleuchte integriert ist. Die Integration des Sensors in die Farbprüfleuchte hat den Vorteil, dass der Sensor samt Farbprüfleuchte als eine bauliche Einheit montiert werden kann. Dementsprechend ist auch nur ein elektrischer Anschluss erforderlich und somit eine einfache Verkabelung möglich. Außerdem lassen sich die Sensoren so auch optisch unauffällig in die Farbprüfleuchte integrieren.

In einer weiteren Ausgestaltung der Erfindung ist vorgesehen, dass der Steuerstand mehrere Bildschirme aufweist. In diesem Fall ist es möglich, mehrere Bildschirme der Maschine und/oder des Farbmessgeräts und/oder des Inspektionssystems über Gesten zu steuern. Insbesondere kann der Bediener auch auswählen mittels Gestensteuerung, auf welchem Bildschirm er welchen Inhalt angezeigt haben möchte. So kann er z. B. auf einem großen Bildschirm an der Rückwand des Steuerstands sich Informationen anzeigen lassen, während er an einem zweiten kleineren Bildschirm, welcher als Touchscreen ausgeführt ist, sich Bedienelemente anzeigen lassen kann.

Vorteilhafterweise ist vorgesehen, dass mittels erfasster Gesten des Bedienpersonals der Inhalt von wenigstens einem Bildschirm auf wenigstens einen weiteren Bildschirm übertragen wird. Insbesondere wenn ein großer Bildschirm und ein kleiner Touchscreen vorgesehen sind, so kann das Bedienpersonal Informationen, welche auf dem Touchscreen angezeigt werden, mittels Gestensteuerung zusätzlich auf den großen Bildschirm übertragen. Eine derartige Geste zur Übertragung des Inhalts von wenigstens einem Bildschirm auf einen anderen Bildschirm kann durch eine sogenannte Wischgeste geschehen, bei der der Bediener eine Wischbewegung in Richtung des jeweils anderen Bildschirms macht.

Dabei ist in einer besonders vorteilhaften Ausgestaltung der vorliegenden Erfindung vorgesehen, dass mittels einer Geste auf wenigstens einem Bildschirm eine Bildschirmmaske auswählbar ist, welche zu wenigstens zwei weiteren Bildschirmen übertragen wird. In diesem Fall kann der Bediener sich den Inhalt eines Bildschirms nicht nur auf einem weiteren sondern auch auf mehreren Bildschirmen anzeigen lassen. Dazu wählt er an einem Bildschirm zunächst die passende Bildschirmmaske aus, wählt dann per Geste diejenigen Bildschirme aus, auf denen die Bildschirmmaske angezeigt werden soll und überträgt dann per weiterer Geste, insbesondere Wischgeste, diese Bildschirmmaske auf die weiteren Bildschirme. Alternativ ist es auch möglich, dass der Bediener unterschiedliche Bildschirmmasken für unterschiedliche Bildschirme auswählt und an jeden Bildschirm eine andere Bildschirmmaske per Wischgeste überträgt. Auf diese Art und Weise kann der Bediener flexibel bestimmen, auf welchem Bildschirm er welchen Bildinhalt angezeigt bekommt.

In einer weiteren Ausgestaltung der Erfindung ist vorgesehen, dass der Steuerstand ein Farbmessgerät zur Erfassung eines auf einer Bogenauflage liegenden bogenförmigen Bedruckstoffs aufweist und dass das Farbmessgerät mittels der Sensoren zur Erfassung von Gesten steuerbar ist. In diesem Fall kann der Drucker neben den Bedienelementen der Druckmaschine zusätzlich noch das Farbmessgerät auf dem Steuerstand ebenfalls per Gestensteuerung kontrollieren. Dies erlaubt eine besonders komfortable Bedienung des Farbmessgeräts in einem einheitlichen Bedienkonzept mit Gestensteuerung.

Die vorliegende Erfindung wird nachfolgend anhand mehrerer Figuren näher beschrieben und erläutert. Es zeigen:
- Figur 1: eine Erfassung von Handgesten unter Verwendung kapazitativer Sensoren und
- Figur 2: eine Erfassung von Handgesten unter Verwendung einer oder mehrerer Infrarot-LEDs
- Figur 3: einen Steuerstand einer Druckmaschine mit großem Bildschirm, Touchscreen, Farbmessgerät und Gestensteuerung,
- Figur 4: die Übertragung einer ausgewählten Bildschirmmaske vom Touchscreen zu dem großen Bildschirm und
- Figur 5: die Übertragung einer ausgewählten Maske vom Touchscreen an den großen Bildschirm und einen weiteren Bildschirm.

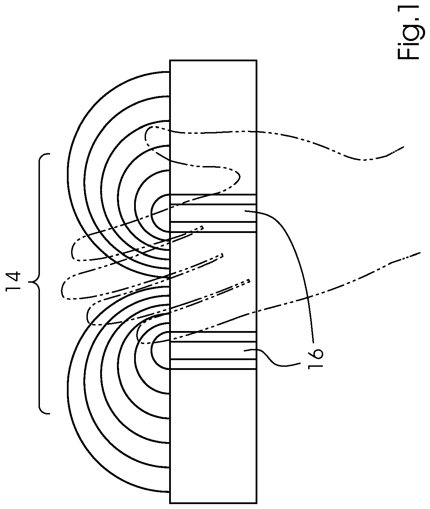

Figur 1 zeigt ein Sensorsystem zur Erfassung von Handgesten unter Verwendung kapazitativer Sensoren 16 und eines elektrischen Feldes 14. Die Sensoren 16 registrieren dabei Veränderungen des elektrischen Feldes 14 durch ausgeführte Gesten der Hand. Die Finger verändern dabei die Feldstärke entsprechend ihrer Form und Bewegung. Eine von den Sensoren 16 registrierte Geste wird von einem an die Vorrichtung angeschlossenen Bedienrechner 7 ausgewertet und in einen Steuerbefehl übersetzt.

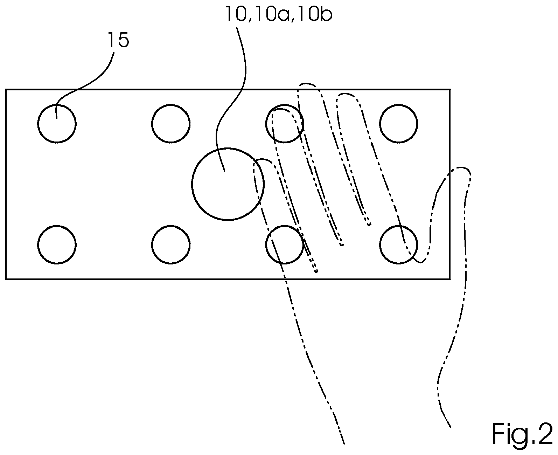

Figur 2 zeigt ein optisches Sensorsystem zur Erfassung von Handgesten unter Verwendung einer oder mehrerer Infrarot-LEDs 15 und einer oder mehrerer Kameras 10, 10a, 10b. Die Kamera oder die Kameras 10, 10a, 10b dienen dazu die durch die Bewegung der Hand erzeugten Reflektionen und/oder Schattenwürfe zu erfassen. Diese werden dann von einem an die Vorrichtung angeschlossenen Bedienrechner 7 ausgewertet und in einen Steuerbefehl übersetzt.

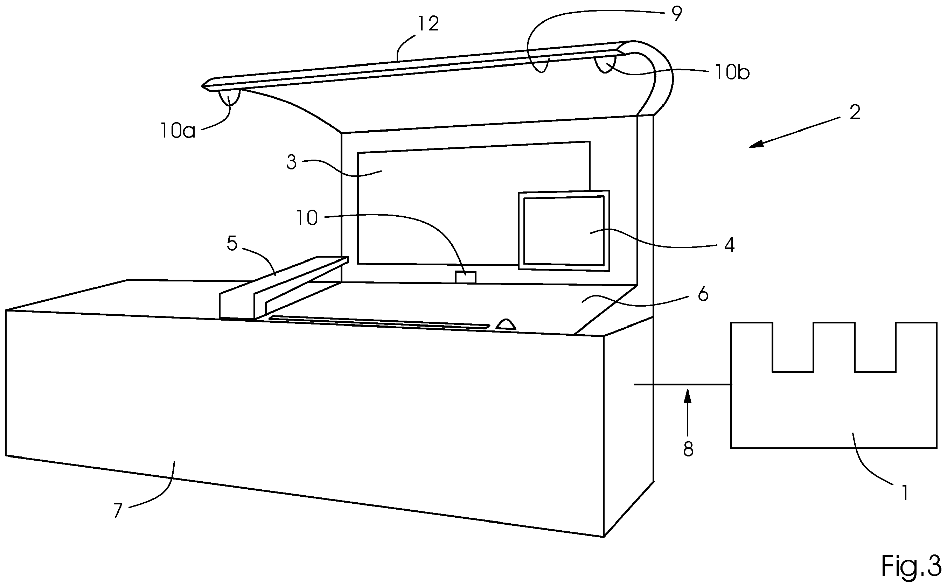

Der in Figur 3 gezeigte Steuerstand 2 dient dazu, eine über eine Kommunikationsverbindung 8 angeschlossene Druckmaschine 1 zu steuern. Der Steuerstand 3 weist dazu einen Bedienrechner 7 auf, welcher Bedienbefehle des Bedienpersonals verarbeitet und Informationen über den Betriebszustand der Druckmaschine 1 an das Bedienpersonal weiterleitet. Der Bedienrechner 7 befindet sich in einem Gehäuse im unteren Bereich des Steuerstands 2. Die Informationen zum Maschinenzustand kann der Bedienrechner 7 über den großen Bildschirm 3 an der Rückwand des Steuerstands 2 oder auf einem Touchscreen 4 anzeigen. Zusätzlich kann der Bedienrechner 7 über den Touchscreen 4 Bedienbefehle entgegennehmen sowie mittels der Kameras 10, 10a, 10b auch Bedienbefehle mittels Gestensteuerung empfangen. Damit die Gestensteuerung auch dann funktioniert, wenn das Bedienpersonal sich vom Steuerstand 2 wegdreht oder über den unteren Teil des Steuerstands 2 beugt, sind mehrere Kameras 10a, 10b, 10 vorhanden. Die Kameras 10a, 10b sind im oberen Bereich des Steuerstands 2 an einer Überdachung 12 angebracht. Die Anordnung jeweils links und rechts sorgt dafür, dass die Gesten des Bedienpersonals aus wenigstens zwei Blickwinkeln erfasst werden. An der Überdachung 12 ist außerdem eine Beleuchtungsquelle 9 angebracht, welche als Farbprüfleuchte dient und für eine Normbeleuchtung des Steuerstands 2 sorgt. Die Beleuchtungsquelle 9 kann damit einen bogenförmigen Bedruckstoff, welcher auf einer Bogenauflage 6 aufliegt, normgerecht ausleuchten, so dass der Drucker die Druckqualität des aufliegenden Bedruckstoffs begutachten kann. Zusätzlich kann der aufliegende Bedruckstoff auf der Bogenauflage 6 mittels eines Farbmessgerät 5 erfasst werden. Auf diese Art und Weise ist eine objektive Qualitätskontrolle der Färbung möglich.

Die untere Kamera 10 dient vor allem dazu, die Gesten des Druckers zu erfassen, wenn dieser mit seinen Fingern an der Oberfläche eines Bedruckstoffs auf der Bogenauflage 6 Gesten zeigt. Dies ist insbesondere dann der Fall, wenn der Drucker die Färbung verändern will und dazu auf diejenigen Bereiche im Bedruckstoff auf der Bogenauflage 6 zeigt, welche er farblich verändern will. Wenn sich der Drucker dabei über die Bogenauflage 6 beugt, so kann dieser Bereich möglicherweise von den Kameras 10a, 10b nicht erfasst werden. Die Kamera 10 ist jedoch so niedrig angeordnet, dass sie auch Gesten des Druckers dann erfassen kann, wenn dieser sich über das Bogenauflagepult 6 beugt.

Der Bediener kann mit den Gesten prinzipiell sämtliche Funktionen der Druckmaschine 1 steuern. Zusätzlich kann die Gestensteuerung auch dazu genutzt werden, z. B. eine Videokonferenz zu steuern, welche auf dem großen Bildschirm 3 abläuft. Weiterhin kann der Bediener durch entsprechende Gesten auf den Bildschirmen 3, 4 eine Lupenfunktion auslösen, um sich bestimmte Bereiche kleiner oder größer darstellen zu lassen. Insbesondere kann der Drucker mittels Gesten bestimmte Bereiche markieren und damit bestimmte Vorgänge auslösen, wie z. B. Bedruckstoff ausmessen, Bogenlänge kontrollieren und auch ein Wenden des Bedruckstoffs auf dem Bogenauflagepult 6 durch die Steuerung erkennen lassen. Über die Gestensteuerung können außerdem auch unterschiedliche Benutzer identifiziert werden, wenn z. B. deren Hände entsprechend optisch abgetastet werden und einer jeweiligen Bedienperson zugeordnet werden. Zusätzlich ist es auch noch möglich, z. B. das Gesicht einer Bedienperson und hier insbesondere die Augen zu erkennen und auch darüber eine Identifizierung vorzunehmen. Um dem Bediener insbesondere auf dem großen Bildschirm 3 immer die passenden Informationen anzeigen zu können, ist eine zugenannte "Eye Tracking" Funktion vorgesehen, welche die Stellung der Augen des Bedieners erfasst und somit in der Lage ist zusammen mit Bedienrechner 7 dem Bediener diejenigen Informationen auf dem großen Bildschirm 3 anzuzeigen, welche zu seinem Blickwinkel passen.

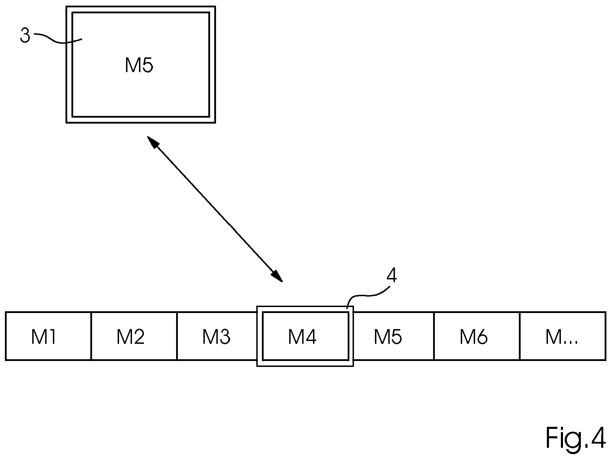

Figur 4 zeigt im unteren Bereich den Touchscreen 4, der mehrere Masken von Bedienoberflächen M anzeigen kann. Die Masken sind in Figur 2 entsprechend durchnummeriert. Der Bediener hat nun die Möglichkeit, z. B. über eine Wischgeste, die am Touchscreen 4 ausgewählte Bedienmaske M4 an den großen Bildschirm 3 übertragen und die derzeit dort angezeigte Maske M5 zu ersetzen. Auf diese Art und Weise kann der Bediener leicht den Bildschirminhalt des Touchscreens 4 an den großen Bildschirm 3 übertragen und umgekehrt. Die Übertragungsrichtung wird dabei durch die Richtung der Wischgeste festgelegt.

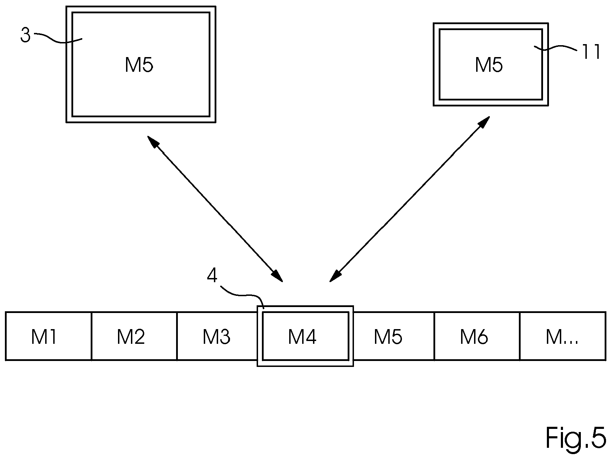

In Figur 5 ist ein weiterer Bildschirm 11 vorhanden, auf dem ebenfalls Masken einer Bedienoberfläche M übertragen werden können. Hier hat der Bediener die Möglichkeit, mit einer Wischgeste eine Bedienmaske M4 vom Touchscreen 4 gleichzeitig an den großen Bildschirm 3 und den weiteren Bildschirm 11 zu übertragen und dort die derzeit angezeigte Maske M5 zu ersetzen. Selbstverständlich ist es auch möglich, für die Bildschirme 3, 11 jeweils eine andere Maske auszuwählen und diese separat zu übertragen. Dies geschieht dann mit einer ähnlichen Geste wie in Figur 2. Bei der Übertragung des Bildschirminhalts vom Touchscreen 4 an mehrere Bildschirme 3, 11 erfolgt dies hingegen mit einer speziellen Geste, welche dazu dient, den gleichen Bildschirminhalt vom Touchscreen 4 an mehrere Bildschirme 3, 11 zu übertragen.

### Bezugszeichenliste

- 1: Druckmaschine
- 2: Bedienpult
- 3: großer Bildschirm
- 4: Touchscreen
- 5: Farbmessgerät
- 6: Bogenauflage
- 7: Bedienrechner
- 8: Kommunikationsverbindung
- 9: Beleuchtung
- 10, 10a, 10b: Kamera
- 11: zusätzlicher Bildschirm
- 12: Überdachung
- 13: Inspektionssystem
- 14: elektrisches Feld
- 15: Infrarot-LED
- 16: kapazitativer Sensor
- M: Maske einer Bedienoberfläche

## Patentansprüche

1. Vorrichtung zum Steuern einer Maschine (1) und/oder eines Farbmessgeräts (5) und/oder eines Inspektionssystems (13) in der grafischen Industrie mit einem Steuerstand (2), welcher wenigstens einen Bildschirm (3, 4, 11) zur Darstellung von Maschineninformationen und/oder Farbinformationen und/oder Bildinformationen aufweist,
wobei der Steuerstand (2) eine Überdachung (12) aufweist und wobei an der Überdachung (12) links und rechts mehrere Kameras (10, 10a, 10b, 16) zur Erfassung von Gesten einer Bedienperson angebracht sind, welche die Maschine (1) und/oder das Farbmessgerät (5) und/oder das Inspektionssystem (13) über den Steuerstand (2) bedient, wobei die Sensoren Kameras (10, 10a, 10b) sind und der Steuerstand (2) einen Rechner (7) aufweist,
**dadurch gekennzeichnet dass** der Rechner Bilder der Kameras (10, 10a, 10b) auswertet und diese Bilder derart auswertet, dass Bewegungen der Augen der Bedienperson erfasst werden und bei der Anzeige der Maschineninformationen und/oder Farbinformationen und/oder Bildinformationen auf dem Bildschirm (3, 2, 11) berücksichtigt werden.

2. Vorrichtung nach Anspruch 1,
wobei der Steuerstand (2) unterhalb wenigstens eines Bildschirms (2) eine Auflage (6) zur Aufnahme eines bogenförmigen Bedruckstoffs aufweist und wenigstens ein Sensor (10, 16) so angeordnet ist, dass er Gesten der Bedienperson erkennen kann, welche diese Bedienperson mit ihren Fingern an der Oberfläche eines auf der Auflage (6) liegenden Bedruckstoffs zeigt.

3. Vorrichtung nach einem der vorhergehenden Ansprüche,
wobei die Vorrichtung in der Lage ist, Gesten von mehreren Bedienpersonen gleichzeitig zu erfassen.

4. Vorrichtung nach einem der vorhergehenden Ansprüche,
wobei die Überdachung (12) eine Farbprüfleuchte (9) aufweist und wenigstens ein Sensor (10a, 10b, 16) in die Farbprüfleuchte (9) integriert ist.

5. Vorrichtung nach einem der vorhergehenden Ansprüche,
wobei der Steuerstand (2) mehrere Bildschirme (2, 4, 11) aufweist.

6. Vorrichtung nach Anspruch 5,
wobei mittels erfasster Gesten des Bedienpersonals der Inhalt von wenigstens einem Bildschirm (4) auf wenigstens einen weiteren Bildschirm (3) übertragen wird.

7. Vorrichtung nach Anspruch 6,
wobei mittels einer Geste auf wenigstens einem Bildschirm (4) eine Bildschirmmaske (M) auswählbar ist, welche zu wenigstens zwei weiteren Bildschirmen (3, 11) übertragen wird.

## Claims

1. Device for controlling a machine (1) and/or a color measurement device (5) and/or an inspection system (13) in the graphic arts industry comprising a control console (2) that includes at least one screen (3, 4, 11) for displaying machine information and/or color information and/or image information,
wherein the control console (2) comprises a roofing (12) and a plurality of cameras (10, 10a, 10b, 16) disposed to the left and right sides of the roofing (12) for recognizing gestures of an operator who operates the machine (1) and/or the color measurement device (5) and/or the inspection system (13) via the control console (2), wherein the sensors are cameras (10, 10a, 10b) and the control console (2) comprises a computer (7),
**characterized in**
**that** the computer evaluates pictures of the camera (10, 10a, 10b) and evaluates them in such a way that the operator's eye movements are detected and taken into account for the displaying of machine information and/or color information and/or image information on the screen (3, 2, 11).

2. Device according to Claim 1,
wherein the control console (2) includes a support (6) for receiving a sheet-shaped printing material, the support (6) arranged underneath at least one screen (2), and wherein at least one sensor (10, 16) is arranged in such a way that it is capable of recognizing gestures the operator makes with his fingers on the surface of a printing material that rests on the support (6).

3. Device according to any one of the preceding claims,
wherein the device is capable of simultaneously recognizing gestures of multiple operators.

4. Device according to any one of the preceding claims,
wherein the roofing (12) includes a color inspection light (9) and at least one sensor (10a, 10b, 16) integrated into the color inspection light (9).

5. Device according to any one of the preceding claims,
wherein the control console comprises a plurality of screens (2, 4, 11).

6. Device according to Claim 5,
wherein the content of at least one screen (4) is transmitted to at least one further screen (3) by detected gestures of the operating staff.

7. Device according to Claim 6,
wherein a screen template (M) is selectable by gesture on at least one screen (4) to be transmitted to at least two further screens (3, 11).

## Revendications

1. Dispositif pour la commande d'une machine (1) et/ou d'un appareil de mesure d'encre (5) et/ou d'un système d'inspection (13) dans l'industrie graphique avec une console de commande (2), qui présente au moins un écran (3, 4, 11) pour la représentation d'informations relative à la machine et/ou d'informations relatives à l'encre et aux images,
la console de commande (2) présentant un abri (12) et à droite et à gauche de l'abri (12) plusieurs caméras (10, 10a, 10b, 16) étant placées pour la détection de gestes d'un opérateur, lequel commande la machine (1) et/ou l'appareil de mesure d'encre (5) et/ou le système d'inspection (13) par la console de commande (2),
les capteurs étant des caméras (10, 10a, 10b) et la console de commande (2) présentant un ordinateur (7),
**caractérisé en ce que** l'ordinateur analyse des images des caméras (10, 10a, 10b) et analyse ces images de telle sorte que des mouvements des yeux de l'opérateur sont captés et sont pris en compte lors de l'affichage des informations relatives à la machine et/ou relatives à l'encre et/ou relatives à l'image sur l'écran (3, 2, 11).

2. Dispositif selon la revendication 1
la console de commande (2) présentant en dessous d'au moins un écran (2), une surface de support (6) pour la réception d'un substrat imprimé en forme de feuille et au moins un capteur (10, 16) étant disposé de sorte qu'il puisse détecter les gestes de l'opérateur qui montre les doigts de cet opérateur sur la surface d'un substrat imprimé se trouvant sur la surface de support (6).

3. Dispositif selon l'une des revendications précédentes,
le dispositif étant en mesure de détecter des gestes de plusieurs opérateurs en même temps.

4. Dispositif selon l'une des revendications précédentes,
l'abri (12) présentant une lampe témoin (9) et au moins un capteur (10a, 10b, 16) étant intégré dans la lampe témoin (9).

5. Dispositif selon l'une des revendications précédentes,
la console de commande (2) présentant au moins plusieurs écrans (2, 4, 11).

6. Dispositif selon la revendication 5, le contenu d'au moins un écran (4) étant transmis au moyen de gestes détectés du personnel opérateur à au moins un autre écran (3).

7. Dispositif selon la revendication 6,
un masque d'écran (M) étant sélectionnable au moyen d'un geste sur au moins un écran (4) lequel sera transmis à au moins deux autres écrans (3, 11).
